# FASCICULE DE BREVET EUROPEEN

(11) **EP 2 623 750 B1**
(45) Date de publication et mention de la délivrance du brevet: **13.07.2016**
(21) Numéro de dépôt: 12008276.3
(22) Date de dépôt: 12.12.2012
(51) Int. Cl.: F02C 9/18, F02C 9/28

(54) **Dispositif et procédé de régulation d'un turbomoteur, et aéronef**
Vorrichtung und Verfahren zur Regulierung eines Turbomotors, und Luftfahrzeug
Device and method for controlling a turboshaft engine, and aircraft

(30) Priorité: 06.02.2012 FR 1200345
(43) Date de publication de la demande: 07.08.2013
(73) Titulaire: Airbus Helicopters, 13725 Marignane Cedex (FR)
(72) Inventeur: Beaud, Southdary, F-84200 Carpentras (FR); Martin, Laurent, F-13160 Chateaurenard (FR)
(74) Mandataire: Pouillot, Laurent Pierre Paul

(56) Documents cités:
- GB-A- 2 251 657
- US-A1- 2006 042 252
- US-A1- 2006 101 826
- US-B1- 6 364 602

## Description

La présente invention concerne un dispositif et un procédé de régulation d'un turbomoteur notamment de giravion permettant de contrôler l'accélération de ce turbomoteur.

Ce type de turbomoteur est équipé d'un système de régulation qui a pour fonction principale de réguler en vol la puissance délivrée par le turbomoteur. La vitesse de rotation du rotor principal de sustentation voire d'avancement du giravion est alors maintenue à une valeur sensiblement constante.

En effet, un giravion est notamment piloté en agissant sur le pas des pales de ce rotor principal. Une augmentation de ce pas a pour conséquence une chute rapide de la vitesse de rotation de ce rotor due à l'augmentation de la traînée du rotor. Le turbomoteur doit alors être accéléré rapidement de manière à compenser cette chute pour que le giravion puisse être maintenu en vol stabilisé. De la même façon, lors de la baisse du pas des pales, il faut décélérer le turbomoteur pour que la vitesse de rotation du rotor ne dépasse pas la limite fixée par le constructeur.

De plus, la régulation du turbomoteur doit être contrôlée pour permettre une augmentation de la puissance absorbée par le rotor principal sans risque de pompage du turbomoteur. Ce pompage est un phénomène qui affecte les compresseurs des turbomoteurs lorsque localement, l'incidence trop élevée d'une aube ou d'un redresseur provoque un décrochage aérodynamique qui réduit considérablement le débit d'air. Une conséquence de ce phénomène est une surchauffe dans la chambre de combustion pouvant être à l'origine de la détérioration d'une turbine du turbomoteur.

De plus, le pompage d'un turbomoteur peut générer une perte de puissance, l'apparition de vibrations susceptibles d'endommager des paliers et le confort des passagers par exemple, l'apparition de bruits anormaux, ou encore l'émission de flammes.

Le pompage peut aussi entraîner l'extinction du turbomoteur.

De même, la décélération doit aussi être contrôlée pour éviter une extinction du turbomoteur.

On connaît un dispositif de régulation électronique, dénommé FADEC (« *Full Authority Digital Engine Control »* selon l'appellation anglaise) par l'homme du métier. Des lois de régulation, d'accélération ou de décélération par exemple, sont programmées dans le dispositif de régulation électronique pour la régulation du turbomoteur sans risque de pompage ou d'extinction du turbomoteur.

De plus, le dispositif de régulation électronique reçoit des signaux de capteurs mesurant différents paramètres du turbomoteur. En fonction de ces paramètres, le dispositif de régulation électronique utilise des lois de régulation pour commander un actionneur qui ajuste le débit de carburant en jouant sur la position du doseur du débit carburant du turbomoteur.

Classiquement, les turbomoteurs sont conçus pour fonctionner sans pompage dans leur domaine d'utilisation.

Dès lors, une loi de régulation en fonctionnement normal est établie de manière à présenter une première marge relativement importante par rapport à une zone de pompage du turbomoteur.

De plus, une loi de régulation en accélération est établie. Cette loi de régulation en accélération présente une deuxième marge relativement faible par rapport à une zone de pompage du turbomoteur.

Cette loi de régulation en accélération peut prendre en considération un prélèvement d'air figé et maximal sur le générateur de gaz du turbomoteur, voire un prélèvement mécanique figé sur le générateur de gaz du turbomoteur.

Dans un diagramme présentant le taux de compression du générateur de gaz d'un turbomoteur en ordonnée et un débit d'air de ce générateur de gaz en abscisse, lors d'une phase transitoire d'accélération un point de fonctionnement du turbomoteur s'éloigne d'une ligne de fonctionnement normal correspondant à la loi de régulation normale pour atteindre une ligne de fonctionnement en accélération correspondant à la loi de régulation en accélération. On se référera à la littérature pour obtenir un tel diagramme.

La ligne de fonctionnement en accélération est alors disposée entre la ligne de fonctionnement normal et une ligne de pompage représentant l'état de pompage du turbomoteur.

La marge au pompage du turbomoteur diminue donc quand le turbomoteur accélère. En fonction de l'intensité de l'accélération, on constate parfois l'apparition d'un phénomène de pompage.

Pour limiter ces phénomènes, un système muni d'une vanne de décharge peut être implémenté.

De même, un système connu sous l'acronyme IGV soit « Inlet Guides Vanes » en langue anglaise peut être implémenté.

Ces systèmes permettent d'augmenter les marges de pompage.

Cet état de la technique inclut donc une unique loi de régulation en accélération, prenant éventuellement en considération un prélèvement d'air figé voire un prélèvement mécanique figé sur le générateur de gaz du turbomoteur, et une pluralité de systèmes activables pour éviter l'apparition d'un phénomène de pompage.

Le document EP 1 712 761 décrit un turbomoteur muni d'un équipement électrique. L'équipement électrique permet de réaliser un prélèvement d'énergie pour améliorer une marge de pompage.

L'arrière plan technologique comprend aussi les documents US 6 364 602, US 2006/042252, US 2006/101826, GB 2 251 657, et FR 2 968 716.

L'invention a alors pour objet de proposer un procédé pour réduire les risques d'apparition d'un phénomène de pompage d'un turbomoteur, et notamment un turbomoteur d'aéronef. ,

Selon l'invention, on met en oeuvre un procédé selon la revendication 1 pour réduire les risques d'apparition d'un phénomène de pompage d'un turbomoteur, ce turbomoteur comportant un générateur de gaz ainsi qu'un moyen de prélèvement d'air dans ce générateur de gaz et un moyen de prélèvement mécanique d'énergie coopérant mécaniquement avec le générateur de gaz.

Ce procédé est caractérisé en ce que :
- une pluralité de lois de régulation en accélération sont établies avant l'utilisation du turbomoteur et mémorisées dans un calculateur moteur, chaque loi de régulation en accélération correspondant à une première plage qui est une plage de prélèvement d'air réalisé par ledit moyen de prélèvement d'air et à une deuxième plage qui est une plage de prélèvement mécanique réalisé par le moyen de prélèvement mécanique,
- durant l'utilisation du turbomoteur, on mesure en continu un prélèvement d'air courant et un prélèvement mécanique courant, selon une période d'échantillonnage de l'ordre du dixième de secondes par exemple,
- on contrôle une accélération du turbomoteur en mettant en oeuvre la loi de régulation en accélération correspondant au prélèvement d'air courant et au prélèvement mécanique courant.

En effet, la demanderesse note que le prélèvement d'air a un effet sur les marges de pompage. En augmentant le prélèvement d'air on éloigne une ligne de fonctionnement du turbomoteur d'une zone de pompage.

En prenant en considération une pluralité de niveaux de prélèvement d'air au lieu d'un niveau maximal, on réduit les risques d'apparition du phénomène de pompage.

En outre, un prélèvement mécanique est usuellement réalisé sur un générateur de gaz de turbomoteur par un équipement électrique de type générateur électrique. Cet. équipement électrique peut aussi servir de démarreur.

Le prélèvement mécanique a pour effet de freiner le générateur de gaz en imposant un couple résistant sur un arbre du générateur de gaz par exemple. A iso-vitesse de rotation du générateur de gaz, un prélèvement mécanique tend à rapprocher un turbomoteur de sa zone de pompage.

En prenant en considération une pluralité de niveaux de prélèvement mécanique au lieu d'un niveau figé, on réduit les risques d'apparition du phénomène de pompage.

Le procédé explicité suggère donc de définir de manière innovante un jeu de lois de régulation en accélération, chaque loi de régulation étant associée à un prélèvement d'air et à un prélèvement mécanique donné.

Ce procédé peut de plus comporter une ou plusieurs des caractéristiques qui suivent.

Par exemple, pour mesurer le prélèvement d'air, on mesure le débit d'air prélevé par le moyen de prélèvement d'air.

En outre, le moyen de prélèvement mécanique étant un équipement électrique, on détermine le prélèvement mécanique par une mesure d'une puissance électrique fournie par l'équipement électrique.

En effet, le moyen de prélèvement mécanique transforme de l'énergie mécanique en énergie électrique consommée par l'aéronef. Dès lors, on mesure la puissance électrique fournie par l'équipement électrique.

Selon un autre aspect, lorsque le prélèvement d'air n'est pas maximal, et donc n'atteint pas une butée prédéfinie, on augmente le prélèvement d'air pour accroître l'accélération du turbomoteur.

L'augmentation du prélèvement d'air induit en effet le passage d'une loi de régulation en accélération courante à une loi de régulation en accélération plus sévère.

A titre de variante ou en complément, lorsque ledit prélèvement mécanique n'est pas nul, on interrompt ce prélèvement mécanique pour accroître l'accélération dudit turbomoteur.

La réduction du prélèvement mécanique induit en effet le passage d'une loi de régulation en accélération courante à une loi de régulation en accélération plus sévère.

On comprend qu'il est possible de vérifier préalablement que l'aéronef peut temporairement fonctionner en l'absence d'un tel prélèvement mécanique, en utilisant par exemple un surcroit de prélèvement mécanique sur un autre turbomoteur le cas échéant ou en puisant de l'énergie dans une batterie.

Selon un autre aspect, on peut établir au moins trois plages de prélèvement d'air qui correspondent respectivement à un prélèvement d'air faible, un prélèvement d'air intermédiaire et un prélèvement d'air élevé.

De même, on peut établir au moins trois plages de prélèvement mécanique qui correspondant respectivement à un prélèvement mécanique faible, un prélèvement mécanique intermédiaire et un prélèvement mécanique élevé.

La combinaison en résultant peut alors conduire à l'établissement de neuf lois de régulation en accélération distinctes.

Outre un procédé, l'invention vise aussi un dispositif de régulation selon la revendication 8 pour réduire les risques d'apparition d'un phénomène de pompage d'un turbomoteur, ce turbomoteur comportant un générateur de gaz ainsi qu'un moyen de prélèvement d'air dans ce générateur de gaz et un moyen de prélèvement mécanique d'énergie coopérant mécaniquement avec le générateur de gaz. Le turbomoteur est contrôlé par un calculateur moteur tel qu'un calculateur moteur connu sous l'acronyme FADEC soit « Full Authority Digital Engine Control » en langue anglaise.

Ce dispositif de régulation est notamment remarquable en ce que le calculateur moteur comporte un moyen de stockage mémorisant une pluralité de lois de régulation en accélération, chaque loi de régulation en accélération correspondant à une première plage qui est une plage de prélèvement d'air réalisé par le moyen de prélèvement d'air et à une deuxième plage qui est une plage de prélèvement mécanique réalisé par le moyen de prélèvement mécanique.

Le dispositif de régulation comporte aussi un premier moyen de mesure permettant la mesure d'un prélèvement d'air courant et deuxième moyen de mesurer permettant la mesure d'un prélèvement mécanique courant qui sont reliés au calculateur moteur.

Le calculateur moteur exécute alors des instructions mémorisées pour contrôler une accélération du turbomoteur en mettant en oeuvre la loi de régulation en accélération correspondant au prélèvement d'air courant et au prélèvement mécanique courant.

Ce dispositif peut de plus comporter une ou plusieurs des caractéristiques suivantes ;
Par exemple, le premier moyen de mesure comporte un dispositif de mesure du débit d'air prélevé.

Par ailleurs, le moyen de prélèvement mécanique étant un équipement électrique, le deuxième moyen de mesure comporte un dispositif de mesure d'une puissance électrique fournie par l'équipement électrique.

Un tel équipement électrique peut être un générateur électrique, remplissant éventuellement une fonction additionnelle de démarreur.

Enfin, l'invention vise un aéronef muni d'un turbomoteur comportant un générateur de gaz ainsi qu'un moyen de prélèvement d'air dans ce générateur de gaz et un moyen de prélèvement mécanique d'énergie coopérant mécaniquement avec le générateur de gaz.

L'aéronef comporte alors un dispositif de régulation selon l'invention pour mettre en oeuvre le procédé explicité.

L'invention et ses avantages apparaîtront avec plus de détails dans le cadre de la description qui suit avec des exemples de réalisation donnés à titre illustratif en référence aux figures annexées qui représentent :
- la figure 1, une vue d'un aéronef selon l'invention,
- la figure 2, un schéma explicitant le procédé appliqué, et
- la figure 3, un diagramme présentant une limite en pompage d'un turbomoteur.

Les éléments présents dans plusieurs figures distinctes sont affectés d'une seule et même référence.

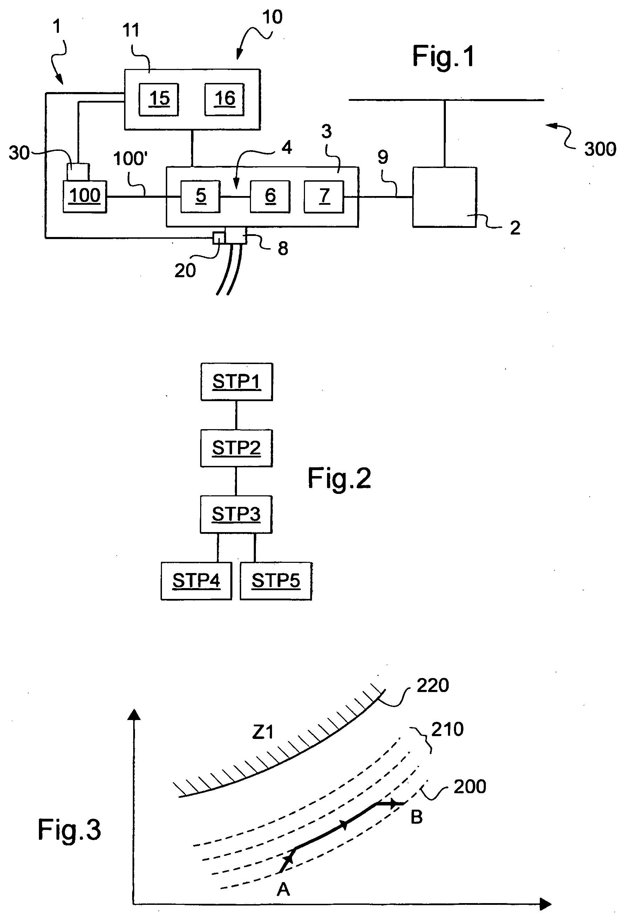

La figure 1 présente un aéronef 1 muni d'une voilure tournante 300.

L'aéronef 1 comporte au moins un turbomoteur 3 pour entraîner la voilure tournante 300 au travers d'une boîte de transmission de puissance principale 2.

Chaque turbomoteur comporte un générateur de gaz 4 et une turbine libre 7. Par exemple, le générateur de gaz comporte un compresseur 5 coopérant avec une turbine haute pression 6, la turbine haute pression 6 étant agencée en amont de la turbine libre 7.

La turbine libre 7 est alors liée à la boîte de transmission de puissance principale 2 par une chaîne cinématique 9. Cette chaîne cinématique 9 est munie par exemple d'un arbre de sortie mis en rotation par la turbine libre.

Par ailleurs, le turbomoteur comporte un moyen de prélèvement d'air 8 permettant de prélever de l'air à partir du générateur de gaz. Le prélèvement d'air peut par exemple être utilisé par un système de chauffage et de climatisation.

De plus le turbomoteur comporte un moyen de prélèvement mécanique 100 d'énergie.

Ce moyen de prélèvement mécanique 100 peut être un équipement électrique de type générateur électrique. Le moyen de prélèvement mécanique 100 est alors entraîné en rotation par le générateur de gaz 4 via un arbre 100', pour alimenter l'installation électrique de l'aéronef comprenant par exemple une batterie.

Le moyen de prélèvement mécanique 100 peut aussi fonctionner dans un mode moteur pour remplir une fonction de démarreur.

L'aéronef comporte de plus un dispositif de régulation 10 du turbomoteur.

Ce dispositif de régulation 10 inclut un calculateur moteur 11, tel qu'un calculateur FADEC.

Le calculateur moteur comporte alors une unité de calcul 15 et un moyen de stockage 16, l'unité de calcul exécutant des instructions du moyen de stockage 16 pour réguler le turbomoteur. Une telle unité de calcul peut comprendre au moins un processeur ou tout autre moyen équivalent.

Le calculateur moteur 11 est alors relié au turbomoteur 10 pour mettre en application au moins une loi de régulation visant à contrôler la position d'un doseur de débit en carburant éventuellement.

En référence à la figure 2, un constructeur établit non pas une loi de régulation en accélération, mais une pluralité de lois de régulation durant une étape STP1

La figure 3 présente un diagramme représentant en ordonnée un taux de compression du générateur de gaz 4 et en abscisse un débit d'air au sein de ce générateur de gaz.

Ce diagramme présente une ligne de pompage 220 délimitant une zone de fonctionnement induisant un phénomène de pompage.

Le constructeur établit donc une loi de régulation normale correspondant à une ligne de fonctionnement normal 200.

De plus, le constructeur établit une pluralité de lois de régulation en accélération qui correspondent chacune à une ligne de fonctionnement en accélération 210.

Pour accélérer le turbomoteur afin de passer d'un point initial A de la ligne de fonctionnement normal 200 à un point final B de la ligne de fonctionnement normal 200, on bascule alors de la loi de régulation normale à une loi de régulation en accélération 210 selon le trait représenté en gras sur la figure 3.

Chaque loi de régulation en accélération correspond alors à une première plage qui est une plage de prélèvement d'air réalisé par le moyen de prélèvement d'air 8 et à une deuxième plage qui est une plage de prélèvement mécanique réalisé par le moyen de prélèvement mécanique 100.

En fonction de ces prélèvements, la ligne de fonctionnement correspondante est plus ou moins proche de la ligne de pompage 220.

Le constructeur peut établir au moins trois plages de prélèvement d'air qui correspondent respectivement à un prélèvement d'air faible, un prélèvement d'air intermédiaire et un prélèvement d'air élevé. De même, le constructeur peut établir au moins trois plages de prélèvement mécanique qui correspondent respectivement à un prélèvement mécanique faible, un prélèvement mécanique intermédiaire et un prélèvement mécanique élevé.

Le constructeur peut alors en déduire neuf lois de régulation en accélération distinctes, chaque loi de régulation en accélération étant associée à une plage de prélèvement d'air donnée et une plage de prélèvement mécanique donnée.

Dès lors, le moyen de stockage 16 du calculateur moteur mémorise l'ensemble des lois de régulation et leurs conditions d'application.

Lors de l'utilisation du turbomoteur 3, on mesure en continu un prélèvement d'air courant et un prélèvement mécanique courant durant une étape de mesure STP2.

En référence à la figure 1, le dispositif de régulation 10 comporte alors un premier moyen de mesure 20 permettant la mesure d'un prélèvement d'air courant qui est relié au calculateur moteur 11. Par exemple, le premier moyen de mesure 20 est muni d'un dispositif de mesure du débit d'air prélevé.

De plus, le dispositif de régulation 10 comporte un deuxième moyen de mesure 30 permettant la mesure d'un prélèvement mécanique courant qui est relié au calculateur moteur 11. Le moyen de prélèvement mécanique 100 étant un équipement électrique, ce deuxième moyen de mesure 30 peut être muni d'un dispositif de mesure d'une puissance électrique fournie par l'équipement électrique.

En référence à la figure 2, durant une étape d'accélération STP3 du turbomoteur requise par une manoeuvre de l'aéronef, le calculateur moteur 11 exécute des instructions mémorisées pour contrôler une accélération du turbomoteur 3 en mettant en oeuvre la loi de régulation en accélération correspondant au prélèvement d'air courant et au prélèvement mécanique courant.

Eventuellement, durant une première étape d'optimisation STP4 et lorsque le prélèvement d'air n'est pas maximal, le calculateur moteur 11 commande le moyen de prélèvement d'air 8 pour augmenter le prélèvement d'air.

Cette augmentation du prélèvement d'air est détectée par le premier moyen de mesure 20. L'augmentation du prélèvement d'air est alors signalée au calculateur moteur 11. Le prélèvement d'air courant augmentant, le calculateur moteur 11 met alors en oeuvre une loi de régulation en accélération plus sévère correspondant aux nouveaux niveaux de prélèvement d'air et de prélèvement mécanique.

De même, durant une deuxième étape d'optimisation STP5 et lorsque ledit prélèvement mécanique n'est pas minimal, le calculateur moteur 11 coopère avec un système avionique pour déterminer s'il est possible d'interrompre le prélèvement mécanique.

Dans l'affirmative, le calculateur moteur 11 commande le moyen de prélèvement mécanique 100 pour interrompre le prélèvement mécanique.

La chute du prélèvement mécanique en résultant est détectée par le deuxième moyen de mesure 30, cette chute étant signalée au calculateur moteur 11. Le prélèvement mécanique courant baissant, le calculateur moteur 11 met alors en oeuvre une loi de régulation en accélération plus sévère correspondant aux nouveaux niveaux de prélèvement d'air et de prélèvement mécanique.

La deuxième étape d'optimisation STP5 peut être effectuée seule ou en complément de la première étape d'optimisation STP4.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé pour réduire les risques d'apparition d'un phénomène de pompage d'un turbomoteur (3), ledit turbomoteur (3) comportant un générateur de gaz (4) ainsi qu'un moyen de prélèvement d'air (8) dans ce générateur de gaz (4) et un moyen de prélèvement mécanique (100) d'énergie coopérant mécaniquement avec ledit générateur de gaz (4), **caractérisé en ce que** : .
- une pluralité de lois de régulation en accélération sont établies avant l'utilisation du turbomoteur et mémorisées dans un calculateur moteur (11), chaque loi de régulation en accélération correspondant à une première plage qui est une plage de prélèvement d'air réalisé par ledit moyen de prélèvement d'air (8) et à une deuxième plage qui est une plage de prélèvement mécanique réalisé par le moyen de prélèvement mécanique (100),
- durant l'utilisation du turbomoteur (3), on mesure en continu un prélèvement d'air courant et un prélèvement mécanique courant,
- on contrôle une accélération du turbomoteur en mettant en oeuvre la loi de régulation en accélération correspondant au prélèvement d'air courant et au prélèvement mécanique courant.

2. Procédé selon la revendication 1,
**caractérisé en ce que**, pour mesurer ledit prélèvement d'air, on mesure le débit d'air prélevé.

3. Procédé selon l'une quelconque des revendications 1 à 2,
**caractérisé en ce que**, ledit moyen de prélèvement mécanique (100) étant un équipement électrique, on détermine ledit prélèvement mécanique par une mesure d'une puissance électrique fournie par l'équipement électrique.

4. Procédé selon l'une quelconque des revendications 1 à 3,
**caractérisé en ce que**, lorsque ledit prélèvement d'air n'est pas maximal, on augmente ledit prélèvement d'air pour accroître l'accélération du turbomoteur (4).

5. Procédé selon l'une quelconque des revendications 1 à 4,
**caractérisé en ce que** lorsque ledit prélèvement mécanique n'est pas minimal, on interrompt ledit prélèvement mécanique pour accroître l'accélération dudit turbomoteur (3).

6. Procédé selon l'une quelconque des revendications 1 à 5,
**caractérisé en ce qu'**on établit au moins trois plages de prélèvement d'air qui correspondent respectivement à un prélèvement d'air faible, un prélèvement d'air intermédiaire et un prélèvement d'air élevé.

7. Procédé selon l'une quelconque des revendications 1 à 6,
**caractérisé en ce que** qu'on établit au moins trois plages de prélèvement mécanique qui correspondent respectivement à un prélèvement mécanique faible, un prélèvement mécanique intermédiaire et un prélèvement mécanique élevé.

8. Dispositif de régulation (10) pour réduire les risques d'apparition d'un phénomène de pompage d'un turbomoteur (3), ledit turbomoteur (3) comportant un générateur de gaz (4) ainsi qu'un moyen de prélèvement d'air (8) dans ce générateur de gaz (4) et un moyen de prélèvement mécanique (100) d'énergie coopérant mécaniquement avec ledit générateur de gaz (4), ledit turbomoteur étant contrôlé par un calculateur moteur (11) faisant partie du dispositif de régulation,
**caractérisé en ce que** ledit calculateur moteur comporte un moyen de stockage (16) mémorisant une pluralité de lois de régulation en accélération, chaque loi de régulation en accélération correspondant à une première plage qui est une plage de prélèvement d'air réalisé par ledit moyen de prélèvement d'air (8) et à une deuxième plage qui est une plage de prélèvement mécanique réalisé par le moyen de prélèvement mécanique (100), ledit dispositif de régulation (10) comportant un premier moyen de mesure (20) permettant la mesure d'un prélèvement d'air courant et un deuxième moyen de mesure (30) permettant la mesure d'un prélèvement mécanique courant qui sont reliés au calculateur moteur (11), ledit calculateur moteur (11) exécutant des instructions mémorisées pour contrôler une accélération du turbomoteur (3) en mettant en oeuvre la loi de régulation en accélération correspondant au prélèvement d'air courant et au prélèvement mécanique courant.

9. Dispositif de régulation selon la revendication 8,
**caractérisé en ce que** ledit premier moyen de mesure (20) comporte un dispositif de mesure du débit d'air prélevé.

10. Dispositif de régulation selon l'une quelconque des revendications 8 à 9,
**caractérisé en ce que**, ledit moyen de prélèvement mécanique (100) étant un équipement électrique, ledit deuxième moyen de mesure (30) comporte un dispositif de mesure d'une puissance électrique fournie par l'équipement électrique.

11. Dispositif de régulation selon la revendication 10,
**caractérisé en ce que**, ledit équipement électrique est un générateur électrique.

12. Aéronef (1) muni turbomoteur (3) comportant un générateur de gaz (4) ainsi qu'un moyen de prélèvement d'air (8) dans ce générateur de gaz (4) et un moyen de prélèvement mécanique (100) d'énergie coopérant mécaniquement avec ledit générateur de gaz (4),
**caractérisé en ce que** l'aéronef (1) comporte un dispositif de régulation selon l'une quelconque des revendications 8 à 11.

## Patentansprüche

1. Verfahren zum Reduzieren der Gefahren des Auftretens eines Phänomens der Drehzahlschwankung eines Turbomotors (3), wobei der Turbomotor (3) einen Gasgenerator (4) sowie ein Luftentnahmemittel (8) in diesem Gasgenerator (4) und ein Mittel (100) zur mechanischen Entnahme von Energie, das mechanisch mit dem Gasgenerator (4) zusammenwirkt, aufweist, **dadurch gekennzeichnet, dass**:
- eine Mehrzahl von Regeln der Beschleunigungsregelung vor der Verwendung des Turbomotors aufgestellt und in einem Motorrechner (11) gespeichert werden, wobei jede Regel der Beschleunigungsregelung einem ersten Bereich entspricht, der ein Bereich der Luftentnahme ist, die durch das Mittel zur Entnahme von Luft (8) ausgeführt wird, und einem zweiten Bereich entspricht, der ein Bereich der mechanischen Entnahme ist, die durch das Mittel zur mechanischen Entnahme (100) ausgeführt wird,
- während der Verwendung des Turbomotors (3) kontinuierlich eine aktuelle Luftentnahme und eine aktuelle mechanische Entnahme gemessen werden,
- eine Beschleunigung des Turbomotors gesteuert wird, indem die Regel der Beschleunigungsregelung angewendet wird entsprechend der aktuellen Luftentnahme und der aktuellen mechanischen Entnahme.

2. Verfahren nach Anspruch 1,
**dadurch gekennzeichnet, dass** zum Messen der Luftentnahme der Durchsatz der entnommenen Luft gemessen wird.

3. Verfahren nach einem der Ansprüche 1 bis 2,
**dadurch gekennzeichnet, dass** das Mittel zur mechanischen Entnahme (100) eine elektrische Ausrüstung ist, wobei die mechanische Entnahme bestimmt wird durch eine Messung einer elektrischen Leistung, die von der elektrischen Ausrüstung geliefert wird.

4. Verfahren nach einem der Ansprüche 1 bis 3,
**dadurch gekennzeichnet, dass**, wenn die Luftentnahme nicht maximal ist, diese erhöht wird, um die Beschleunigung des Turbomotors (4) zu steigern.

5. Verfahren nach einem der Ansprüche 1 bis 4,
**dadurch gekennzeichnet, dass**, wenn die mechanische Entnahme nicht minimal ist, die mechanische Entnahme unterbrochen wird, um die Beschleunigung des Turbomotors (3) zu steigern.

6. Verfahren nach einem der Ansprüche 1 bis 5,
**dadurch gekennzeichnet, dass** mindestens drei Bereiche der Luftentnahme erstellt werden, die jeweils einer geringen Luftentnahme, einer mittleren Luftentnahme und einer hohen Luftentnahme entsprechen.

7. Verfahren nach einem der Ansprüche 1 bis 6,
**dadurch gekennzeichnet, dass** mindestens drei Bereiche der mechanischen Entnahme erstellt werden, die jeweils einer geringen mechanischen Entnahme, einer mittleren mechanischen Entnahme und einer hohen mechanischen Entnahme entsprechen.

8. Regelungsvorrichtung (10) zum Reduzieren der Gefahren des Auftretens eines Phänomens der Drehzahlschwankung eines Turbomotors (3), wobei der Turbomotor (3) einen Gasgenerator (4) sowie ein Luftentnahmemittel (8) in diesem Gasgenerator (4) und ein Mittel (100) zur mechanischen Entnahme von Energie aufweist, das mechanisch mit dem Gasgenerator (4) zusammenwirkt, wobei der Turbomotor von einem Motorrechner (11) gesteuert wird, der Teil der Regelungsvorrichtung ist,
**dadurch gekennzeichnet, dass** der Motorrechner ein Speichermittel (16) aufweist, das eine Mehrzahl von Regeln der Beschleunigungsregelung speichert, wobei jede Regel der Beschleunigungsregelung einem ersten Bereich entspricht, der ein Bereich der Luftentnahme ist, die von dem Luftentnahmemittel (8) ausgeführt wird, und einem zweiten Bereich entspricht, der ein Bereich der mechanischen Entnahme ist, die von dem mechanischen Entnahmemittel (100) ausgeführt wird, wobei die Regelungsvorrichtung (10) ein erstes Messelement (20) aufweist, das es erlaubt, eine aktuelle Luftentnahme zu messen, und ein zweites Messelement (30), das es erlaubt, eine aktuelle mechanische Entnahme zu messen, und die Messelemente mit dem Motorrechner (11) verbunden sind, wobei der Motorrechner (11) gespeicherte Befehle ausführt, um eine Beschleunigung des Turbomotors (3) zu steuern, indem die Regel zur Beschleunigungsregelung entsprechend der aktuellen Luftentnahme und der aktuellen mechanischen Entnahme ausgeführt wird.

9. Regelungsvorrichtung nach Anspruch 8,
**dadurch gekennzeichnet, dass** das erste Messelement (20) eine Vorrichtung zur Messung des Durchsatzes der entnommenen Luft aufweist.

10. Regelungsvorrichtung nach einem der Ansprüche 8 bis 9,
**dadurch gekennzeichnet, dass** das Mittel zur mechanischen Entnahme (100) eine elektrische Ausrüstung ist, wobei das zweite Messelement (30) eine Vorrichtung zur Messung einer elektrischen Leistung aufweist, die von der elektrischen Ausrüstung geliefert wird.

11. Regelungsvorrichtung nach Anspruch 10,
**dadurch gekennzeichnet, dass** die elektrische Ausrüstung ein elektrischer Generator ist.

12. Luftfahrzeug (1) mit einem Turbomotor (3), der einen Gasgenerator (4) sowie ein Luftentnahmemittel (8) in dem Gasgenerator (4) und ein Mittel (100) zur mechanischen Entnahme von Energie aufweist, das mechanisch mit dem Gasgenerator (4) zusammenwirkt,
**dadurch gekennzeichnet, dass** das Luftfahrzeug (1) eine Regelungsvorrichtung nach einem der Ansprüche 8 bis 11 aufweist.

## Claims

1. Method for reducing the risks of occurrence of a surge phenomenon of a turboengine (3), said turboengine (3) comprising a gas generator (4) as well as an air extraction means (8) for extracting air from this gas generator (4) and a mechanical extraction means (100) for extracting energy cooperating mechanically with said gas generator (4), **characterised in that**:
- a plurality of acceleration regulation laws are established before the use of the turboengine and stored in an engine computer (11), each acceleration regulation law corresponding to a first range which is an air extraction range performed by said air extraction means (8) and to a second range which is a mechanical extraction range performed by the mechanical extraction means (100),
- during the use of the turboengine (3), a current air extraction and a current mechanical extraction are measured continuously,
- an acceleration of the turboengine is controlled by implementing the acceleration regulation law corresponding to the current air extraction and to the current mechanical extraction.

2. Method according to claim 1,
**characterised in that**, in order to measure said air extraction, the extracted air flow rate is measured.

3. Method according to any one of claims 1 to 2,
**characterised in that**, said mechanical extraction means (100) being electrical equipment (100), said mechanical extraction is determined by measuring an electrical power supplied by the electrical equipment.

4. Method according to any one of claims 1 to 3,
**characterised in that**, when said air extraction is not at its maximum, said air extraction is increased to increase the acceleration of the turboengine (4).

5. Method according to any one of claims 1 to 4,
**characterised in that**, when said mechanical extraction is not at its minimum, said mechanical extraction is interrupted to increase the acceleration of said said turboengine (3).

6. Method according to any one of claims 1 to 5,
**characterised in that** at least three air extraction ranges are established which correspond respectively to a low air extraction, an intermediate air extraction and a high air extraction.

7. Method according to any one of claims 1 to 6,
**characterised in that** at least three mechanical extraction ranges are established which correspond respectively to a low mechanical extraction, an intermediate mechanical extraction and a high mechanical extraction.

8. Regulation device (10) for reducing the risks of occurrence of a surge phenomenon of a turboengine (3), said turboengine (3) comprising a gas generator (4) as well as an air extraction means (8) for extracting air from this gas generator (4) and a mechanical extraction means (100) for extracting energy cooperating mechanically with said gas generator (4), said turboengine being controlled by an engine computer (11) forming part of the regulation device,
**characterised in that** said engine computer a comprises storage means (16) storing a plurality of acceleration regulation laws, each acceleration regulation law corresponding to a first range which is an air extraction range performed by said air extraction means (8) and to a second range which is a mechanical extraction range performed by the mechanical extraction means (100), said regulation device (10) comprising a first measurement means (20) enabling the measurement of a current air extraction and a second measurement means (30) enabling the measurement of a current mechanical extraction which are connected to the engine computer (11), said engine computer (11) executing stored instructions to control an acceleration of the turboengine (3) by implementing the acceleration regulation law corresponding to the current air extraction and to the current mechanical extraction.

9. Regulation device according to claim 8,
**characterised in that** said first measurement means (20) comprises a measurement device for measuring the extracted air flow rate.

10. Regulation device according to any one of claims 8 to 9,
**characterised in that**, said mechanical extraction means (100) being electrical equipment, said second measurement means (30) comprises a measurement device for measuring an electrical power supplied by the electrical equipment.

11. Regulation device according to claim 10,
**characterised in that** said electrical equipment is an electrical generator.

12. Aircraft (1) provided with a turboengine (3) comprising a gas generator (4) as well as an air extraction means (8) for extracting air from this gas generator (4) and a mechanical extraction means (100) for extracting energy cooperating mechanically with said gas generator (4),
**characterised in that** the aircraft (1) comprises a regulation device according to any one of claims 8 to 11.
